# EUROPÄISCHE PATENTSCHRIFT

(11) **EP 4 186 360 B1**
(45) Veröffentlichungstag und Bekanntmachung des Hinweises auf die Patenterteilung: **16.10.2024**
(21) Anmeldenummer: 22209382.5
(22) Anmeldetag: 24.11.2022
(51) Int. Cl.: A01K 1/02

(54) **FERKELSCHUTZEINRICHTUNG FÜR EINE ABFERKELBUCHT UND BETREFFENDE ABFERKELBUCHT**
FARROWING PROTECTION DEVICE FOR A FARROWING PEN AND RELATIVE FARROWING PEN
DISPOSITIF DE PROTECTION DES PORCELETS POUR UNE LOGE DE MISE BAS ET LOGE DE MISE BAS CORRESPONDANTE

(30) Priorität: 26.11.2021 LU 102880
(43) Veröffentlichungstag der Anmeldung: 31.05.2023
(73) Patentinhaber: Big Dutchman International GmbH, 49377 Vechta (DE)
(72) Erfinder: Hinrichs, Birgit, 49377 Vechta (DE); Wichmann, Rolf, 49377 Vechta-Bergstrup (DE); Drees, Jens, 49456 Bakum (DE); Gaeckle, Stefan, 27239 Twistringen (DE)
(74) Vertreter: Eisenführ Speiser

(56) Entgegenhaltungen:
- EP-B1- 3 014 986
- DE-U1- 20 315 062
- DE-U1- 20 315 062
- DE-U1- 202021 106 464

## Beschreibung

Ferkelschutzeinrichtung für eine Abferkelbucht und betreffende Abferkelbucht Die Erfindung betrifft eine Ferkelschutzeinrichtung für eine Abferkelbucht, mit einem ersten Seitenteil, einer mit dem ersten Seitenteil verbundenen Trogkonsole, und einem schwenkbar um einer Schwenkachse mit der Trogkonsole verbundenen zweiten Seitenteil, wobei die Ferkelschutzeinrichtung durch Verschwenken des zweiten Seitenteils in eine Ferkelschutzstellung bringbar ist, bei der das zweite Seitenteil im Wesentlichen parallel zu dem ersten Seitenteil angeordnet ist, und in eine Bewegungsstellung, bei der das zweite Seitenteil von dem ersten Seitenteil abgespreizt ist, wobei an dem ersten Seitenteil ein erstes Türelement angeordnet ist und an dem zweiten Seitenteil ein zweites Türelement angeordnet ist, und wobei die Türelemente die Ferkelschutzeinrichtung in der Ferkelschutzstellung rückseitig begrenzen.

Derartige Ferkelschutzeinrichtungen für Abferkelbuchten sind aus dem Stand der Technik bekannt. Sie werden insbesondere im Rahmen der Schweinezucht dazu verwendet, das Muttertier, auch als Sau bezeichnet, während des Geburtsvorganges zu stützen. Der Gebärvorgang durch die Sau wird beim Schwein auch als Abferkeln bezeichnet. Darüber hinaus erfüllen Ferkelschutzeinrichtungen den Zweck, die neugeborenen Ferkel vor mechanischen Einwirkungen, insbesondere einem Einklemmen, durch die Sau zu schützen. Neben statischen Ferkelschutzeinrichtungen sind Ferkelschutzeinrichtungen bekannt, die temporär in eine Ferkelschutzstellung gebracht werden können, und bei denen der Bewegungsbereich der Sau mittels schwenkbarer Seitenwände variabel gestaltet werden kann, sodass bedarfsweise ein größerer Bewegungsbereich für die Sau freigegeben werden kann und sich eine sogenannte Bewegungsbucht ausbildet.

Derartige Ferkelschutzeinrichtungen sind aus EP 3 014 986 B1, EP 1 520 470 A2, DE 24 20 316 A1 sowie aus der DE 20 2014 100 501 U1 bekannt. Eine Ferkelschutzeinrichtung mit variablem Bewegungsraum für die Muttertiere wird beispielsweise vom Unternehmen En-Sta Stalltechnik GmbH vertrieben.

Nachteilig an diesen bekannten Vorrichtungen ist, dass sie zwar grundsätzlich einen variablen Bewegungsraum für die Sau zur Verfügung stellen, hinter der Sau jedoch häufig wenig Raum verbleibt, um diese beispielsweise veterinärmedizinisch zu behandeln oder Geburtshilfe zu leisten.

Darüber hinaus weisen aus dem Stand der Technik vorbekannte Ferkelschutzeinrichtungen zumeist festgelegte Dimensionen auf, die eine Anpassung an die Anatomie des Muttertieres oder die Dimensionen der Abferkelbucht nicht oder nur umständlich ermöglichen. Ferner erfordern aus dem Stand der Technik vorbekannte Ferkelschutzeinrichtungen und Abferkelbuchten häufig die temporäre Entfernung von Teilen, insbesondere von Türelementen, wenn beispielsweise eine veterinärmedizinische Behandlung des Muttertiers vorgenommen werden soll oder Geburtshilfe zu leisten ist. Das Entfernen und Zwischenlagern derartiger herausgenommener Teile gestaltet sich in der Praxis jedoch schwierig und birgt unter Umständen ein Verletzungsrisiko für Mensch und Tier. Auch wurde bei aus dem Stand der Technik vorbekannten Abferkelbuchten gelegentlich beobachtet, dass einzelne Bauteile oder Elemente von Ferkelschutzeinrichtungen in die Abferkelbucht ragen, was ebenfalls unerwünscht ist. Darüber hinaus ist bei bekannten Ferkelschutzeinrichtungen in der Bewegungsstellung zum Abgrenzen des Bewegungsraumes für die Sau neben einem Verschwenken des Seitenteils zumeist auch die Betätigung von wenigstens einem, gelegentlich auch zwei Türelementen notwendig. Dies kann im Hinblick auf den Bedienkomfort nachteilig sein.

Vor diesem Hintergrund lag der Erfindung die Aufgabe zugrunde, eine Ferkelschutzeinrichtung und eine Abferkelbucht der der eingangs genannten Art dahingehend weiterzubilden, dass die im Stand der Technik aufgefundenen Nachteile möglichst weitgehend behoben werden. Insbesondere war eine Ferkelschutzeinrichtung anzugeben, die der Sau unter Berücksichtigung des Ferkelschutzes einen variablen Bewegungsraum zur Verfügung stellt, gleichzeitig an verschiedene Bauraumerfordernisse anpassbar ist und darüber hinaus für den Bediener einen hohen Bedienkomfort aufweist.

Erfindungsgemäß ist erforderlich, dass das erste Türelement an dem ersten Seitenteil und/oder das zweite Türelement an dem zweiten Seitenteil längenverstellbar angeordnet ist (Anspruch 1).

Die Erfindung macht sich die Erkenntnis zunutze, dass durch die längenverstellbare Anordnung der jeweiligen Türelemente an den jeweiligen Seitenteilen ein hohes Maß an Variabilität hinsichtlich der Konfiguration der Ferkelschutzeinrichtung erreicht wird. Damit kann eine derartige Ferkelschutzeinrichtung mit unterschiedlich dimensionierten Abferkelbuchten kombiniert werden.

Ferner wird gewissermaßen zusätzlich eine Mehrfachnutzbarkeit der Bauteile der Ferkelschutzeinrichtung erreicht. So werden Türen der Ferkelschutzeinrichtung zur sicheren Einfassung der Sau verwendet, wenn sich die Ferkelschutzeinrichtung in der Ferkelschutzstellung befindet. In der Bewegungsstellung können die Türelemente unter Ausnutzung ihrer Längenverstellbarkeit zur Abtrennung eines Bewegungsbereiches für die Sau herangezogen werden und insoweit eine Transformation der Ferkelschutzeinrichtung hin zu einer Bewegungsbucht bereitstellen. Bei der Transformation ist der Bediener immer durch die Kombination aus Türelement und Seitenteil gegenüber dem Muttertier geschützt. Durch die Mechanik kann das Seitenteil in der Ferkelschutzstellung verweilen, während das Türelement arretiert wird. Anschließend kann das Seitenteil aufgeschwenkt und die Bewegungsstellung erreicht werden. Hierdurch wird es mittels der erfindungsgemäßen Ferkelschutzeinrichtung ermöglicht, sowohl einen klassischen Ferkelschutzkorb mit im wesentlichen parallelen Seitenteilen auszubilden als auch eine Bewegungsbucht. Dabei kann die Ferkelschutzeinrichtung aufgrund ihrer variablen Längserstreckung an unterschiedliche Abferkelbuchtabmessungen und -konfigurationen angepasst werden, ohne dass eine Betätigung weiterer Buchtenelemente erforderlich ist.

Darüber hinaus wird insbesondere hinter der Ferkelschutzeinrichtung Raum für Unterstützungspersonal bereitgestellt, um etwa Unterstützungsarbeit beim Geburtsvorgang bereitzustellen, indem insbesondere die Türelemente in Richtung Trogkonsole geschoben werden. Hierdurch wird die unterstützende oder behandelnde Person im Vergleich zu manche aus dem Stand der Technik vorbekannten Lösungen nicht eingeengt, sondern kann Maßnahmen ergonomisch und mit guter Zugänglichkeit durchführen. Darüber hinaus kann der Bewegungsraum der Sau in Bezug auf die Ferkel und auch das Unterstützungspersonal, wie bereits ausgeführt, variabel abgegrenzt werden. Im Übrigen ermöglicht die erfindungsgemäße Lösung unterschiedliche Aufstallungskonzepte, etwa die sogenannte Kopf- und Parallelaufstallung oder auch eine Gangaufstallung. Insgesamt ist die Verwendung von herausnehmbaren Türen nicht erforderlich, weshalb die Ferkelschutzeinrichtung bzw. die Abferkelbucht insbesondere weniger separate Bauteile aufweisen, als manche aus dem Stand der Technik vorbekannte Lösungen.

Gemäß der Erfindung ist das Türelement mittels einer Gleitschienenanordnung an dem Seitenteil längenverstellbar angeordnet. Vorzugsweise ist das erste Türelement mittels eine ersten Gleitschienenanordnung an dem ersten Seitenteil längenverstellbar angeordnet und das zweite Türelement mittels einer zweiten Gleitschienenanordnung an dem zweiten Seitenteil. Mittels der Gleitschienenanordnung lässt sich eine robuste und präzise Längenverstellbarkeit der Türelemente relativ zu den Seitenteilen realisieren.

Eine entsprechende Ferkelschutzeinrichtung für eine Abferkelbucht ist aus DE20315062 U1 bekannt.

Die Erfindung betrifft eine Ferkelschutzeinrichtung nach Anspruch 1, und wird dadurch gekennzeichnet, dass die Gleitschienenanordnung eine an dem Seitenteil angeordnete Kulissenführung aufweist, wobei das Türelement einen Führungsabschnitt aufweist, der in der Kulissenführung verschiebbar aufgenommen ist. Vorzugsweise ist der Führungsabschnitt in der Kulissenführung schwenkbeweglich um eine Schwenkachse aufgenommen. Auf diese Weise wird nicht nur eine Relativverstellbarkeit in Form einer Längenverstellbarkeit zwischen Türelement und Seitenteil erreicht, sondern darüber hinaus auch ein Verschwenken des jeweiligen Türelementes relativ zu dem entsprechenden Seitenteil ermöglicht. Auf diese Weise wird die Flexibilität der Ferkelschutzeinrichtung weiter erhöht, insbesondere in Bezug auf deren Anpassbarkeit an unterschiedlich ausgestaltete Abferkelbuchten und Abferkelbuchtdimensionen. Erneut wird durch die schwenkbare Anordnung dem Gedanken Rechnung getragen, eine Mehrfachnutzung der Türelemente zu ermöglichen als Ferkelschutzkorb, zur Längenverstellung und zur Abtrennung bzw. Transformation des Ferkelschutzkorbes hin zu einer Bewegungsbucht, wobei insoweit die äußere Begrenzung der Bewegungsbucht und somit auch der Bewegungsbereich der Sau flexibel einstellbar ist. Hierdurch lässt sich eine Breite der Bewegungsbucht von beispielsweise 3,1 Metern realisieren. Im Falle von veterinärmedizinischen Maßnahmen kann das Türelement mittels der Gleitschienenanordnung parallel zu den Seitenteilen verstellt werden, womit der Abstand zwischen dem Seitenteil und einer Trennwand der Abferkelbucht vergrößert wird, insbesondere gegenüber aus dem Stand der Technik bekannten Lösungen, bei denen das Seitenteil starr und gewissermaßen lang durchgezogen ist.

Gemäß einer bevorzugten Ausführungsform ist die Schwenkachse im Wesentlichen vertikal angeordnet. Der Begriff "im Wesentlichen vertikal" soll verstanden werden, dass hiervon eine exakt vertikale Anordnung der Schwenkachse sowie Abweichungen um ± 10° davon erfasst sind. Vorzugsweise sind das erste Seitenteile und/oder das zweite Seitenteil als gitterförmiges Seitenteil ausgebildet. Auf diese Weise wird die Sau mittels der Seitenteile sicher geführt, wobei gleichzeitig sichergestellt bleibt, dass das Abferkeln und Säugen der Ferkel geringstmöglich behindert wird.

Gemäß einer bevorzugten Ausführungsform weisen das erste und/oder das zweite Seitenteil einen Ferkelabweiser auf. Vorzugsweise weist der Ferkelabweiser eine Ablegehilfe für das Muttertier auf. Die Ferkelabweiser stellen sicher, dass die Ferkel vor einer mechanischen Einwirkung durch die Sau geschützt werden. Insbesondere wird die Sau durch den Ferkelabweiser bzw. die Ablegehilfe beim Abliegen geführt und hierbei unterstützt, wobei die Sau gewissermaßen beim Abgleiten an den Ferkelabweiser bzw. der Ablegehilfe von den Ferkeln weggelenkt wird. Darüber hinaus wird insbesondere dann, wenn sich die Ferkelschutzeinrichtung in der Ferkelschutzstellung befindet, erreicht, dass die Abliegegeschwindigkeit bzw. das Abliegen der Sau insgesamt abgebremst wird, wodurch das Verletzungsrisiko auf Seiten der Ferkel reduziert werden kann.

Vorzugsweise ist der Ferkelabweiser beabstandet zu einer unteren Kante des Seitenteils angeordnet, insbesondere wobei das Seitenteil mehrere im Wesentlichen horizontal verlaufende und übereinander angeordnete Rohrelemente aufweist, und wobei der Ferkelabweiser an einem von der unteren Kante des Seitenteils betrachtet zweiten Rohrelement angeordnet ist, insbesondere mit diesem verschweißt ist. Die betreffende Anordnung hat sich als besonders geeignet zur Unterstützung der Sau beim Abliegen herausgestellt.

Gemäß einer weiteren bevorzugten Ausführungsform weist das Türelement einen ersten Abschnitt auf, der sich ausgehend von dem Führungsabschnitt erstreckt und in der Ferkelschutzstellung im Wesentlichen parallel zu den Seitenteilen verläuft, und wenigstens einen zweiten Abschnitt, der an den ersten Abschnitt angrenzt und sich in der Ferkelschutzstellung in Richtung einer Rückseite der Ferkelschutzeinrichtung und nach innen erstreckt.

Weiterhin bevorzugt weist das Türelement einen dritten Abschnitt auf, der sich ausgehend von dem zweiten Abschnitt erstreckt und in der Ferkelschutzstellung im Wesentlichen rechtwinklig zu den Seitenteilen nach innen gerichtet ist. Die betreffende Ausbildung der Türelemente hat sich als besonders geeignet erwiesen, um zum einen in der Ferkelschutzstellung eine sichere Begrenzung des Bewegungsraumes der Sau bereitzustellen und auf der anderen Seite nach dem Gedanken der Mehrfachnutzbarkeit eine Bewegungsbucht mit flexiblen äußeren Dimensionen bereitzustellen.

Vorzugsweise ist an wenigstens einem der Türelemente ein Verriegelungsmittel angeordnet, welches dazu eingerichtet ist, die Türelemente in der Ferkelschutzstellung, insbesondere miteinander, zu verriegeln. Die Erfindung wird dadurch weitergebildet, dass die Trogkonsole einen Aufstiegschutz aufweist, welcher insbesondere ein oder mehrere Rohrelemente aufweist, wobei die Rohrelemente im Wesentlichen rechtwinklig zu dem ersten Seitenteil oberseitig an der Trogkonsole angeordnet sind. Der Aufstiegschutz verhindert ein unerwünschtes Hinaufklettern der Sau auf einzelne Elemente der Trogkonsole. Vorzugsweise weist die Trogkonsole einen Bock für zwei benachbart angeordnete Ferkelschutzeinrichtungen auf. Die Trogkonsole ist vorzugsweise dazu eingerichtet, mit und relativ zu einer weiteren Ferkelschutzeinrichtung Kopf an Kopf angeordnet zu werden.

Vorzugsweise ist der Bock in eine Trennwand einer Ferkelbucht integriert. Gemäß einer alternativen Ausführungsform ist der Bock an einer festen Wand montiert. Vorzugsweise weist die Trogkonsole eine Tiefe auf, die an die Dimensionen und Anforderungen eines benachbart angeordneten Ferkelnestes angepasst ist. Vorzugsweise ist die Trogkonsole ferner dazu eingerichtet, einen festen und/oder kippbaren Trog aufzunehmen. Darüber hinaus weist die Trogkonsole vorzugsweise Befestigungspunkte zur Aufnahme einer Mutter-Kind-Tränke unmittelbar an der Trogkonsole auf. Gemäß einer alternativ bevorzugten Ausführungsform ist die Trogkonsole dazu eingerichtet, ein Fressgitter aufzunehmen, welches einen visuellen Kontakt zwischen zwei Kopf an Kopf stehenden Sauen ermöglicht oder aber eine Abtrennung aufzunehmen, die eine entsprechende Sichtverbindung blockiert.

Die Erfindung ist vorstehend unter Bezugnahme auf eine Ferkelschutzeinrichtung beschrieben worden. In einem weiteren Aspekt betrifft die Erfindung eine Abferkelbucht mit einer Ferkelschutzeinrichtung nach Anspruch 1.

Die Abferkelbucht macht sich die gleichen Vorteile und bevorzugten Ausführungsformen zunutze wie die erfindungsgemäße Ferkelschutzeinrichtung und umgekehrt. Diesbezüglich wird auf die obigen Ausführungen verwiesen und deren Inhalt hier mit einbezogen.

Die Abferkelbucht wird dadurch weitergebildet, dass das erste Seitenteil beabstandet und insbesondere parallel zu einer äußeren Umfassung der Abferkelbucht angeordnet ist. Mit anderen Worten kann das erste Seitenteil, welches vorzugsweise fest relativ zu der Abferkelbucht angeordnet ist, in einem frei wählbaren Abstand zu einer äußeren Umfassung oder Wand der Abferkelbucht derart angeordnet werden, dass zwischen der Umfassung und dem ersten Seitenteil einen Korridor bzw. Rückzugsraum für die Ferkel entsteht. Dieser Korridor wird aus der Abferkelbucht heraus zugänglich und kann beispielsweise dazu genutzt werden, Ferkel aus der Bucht zu entnehmen.

Gemäß einer bevorzugten Ausführungsform weist die Abferkelbucht ein Kontaktgitter auf, wobei die Türelemente dazu eingerichtet sind in der Bewegungsstellung benachbart zu dem Kontaktgitter arretiert zu werden. Auf diese Weise wird allein durch die Ferkelschutzeinrichtung und das Kontaktgitter ein Bewegungsbereich für die Sau in Form einer Bewegungsbucht definiert und bereitgestellt, ohne dass es hier zu der Verwendung weiterer Stallausrüstungsmittel, wie beispielsweise Gitter, Begrenzungen, oder dergleichen, bedarf. Mit anderen Worten gelingt mittels der erfindungsgemäßen Abferkelbucht und Ferkelschutzeinrichtung, dass der Bewegungsbereich in Breite und Länge ohne zusätzliche Elemente an Aufstallungsmaterial, welches in die Bucht ragt, oder zusätzlich geschwenkt oder temporär entfernt werden müsste, flexibel konfigurierbar ist.

Die Erfindung wird nachfolgend anhand eines bevorzugten Ausführungsbeispiels unter Bezugnahme auf die beigefügten Figuren näher beschrieben.

Hierbei zeigen:
- Fig. 1 ein Ausführungsbeispiel einer erfindungsgemäßen Abferkelbucht mit einer Ferkelschutzeinrichtung in einer Bewegungsstellung in einer Draufsicht; und
- Fig. 2 das Ausführungsbeispiel der erfindungsgemäßen Abferkelbucht mit der Ferkelschutzeinrichtung in einer Ferkelschutzstellung in einer Draufsicht.

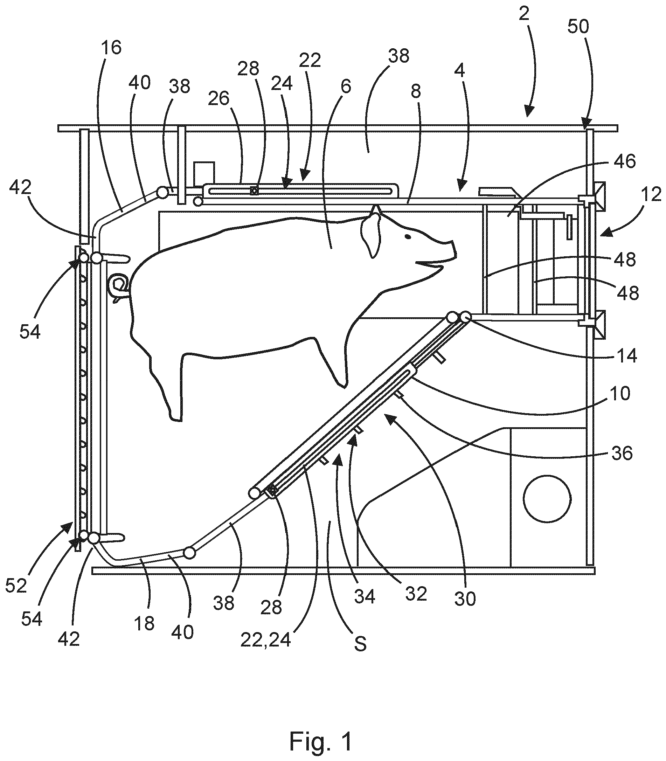

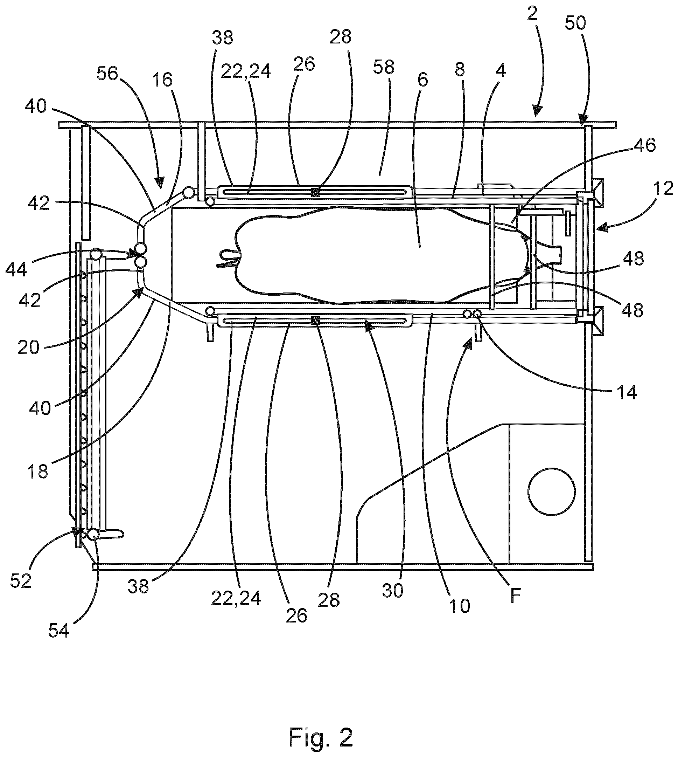

Fig. 1 zeigt eine Abferkelbucht 2. Die Abferkelbucht 2 weist eine äußere Umfassung 50 auf sowie ein Kontaktgitter 52, welches ortsfest (fix) angeordnet ist. Das Kontaktgitter 52 kann alternativ auch als Aufstallungselement, insbesondere Buchtenprofil, ausgebildet sein. In der Abferkelbucht 2 ist eine Ferkelschutzeinrichtung 4 angeordnet. Das Kontaktgitter 52 weist vorzugsweise mindestens die gleiche Höhe wie die Ferkelschutzeinrichtung 4 auf. Die Ferkelschutzeinrichtung 4 weist ein erstes Seitenteil 8 auf. Mit dem ersten Seitenteil 8 ist eine Trogkonsole 12 verbunden. Mit der Trogkonsole 12 ist ferner ein zweites Seitenteil 10 verbunden. Das zweite Seitenteil 10 ist schwenkbar um eine Schwenkachse 14 mit der Trogkonsole 12 verbunden. Die Ferkelschutzeinrichtung 4 ist durch Verschwenken des zweiten Seitenteils 10 in eine in Fig. 1 gezeigte Bewegungsstellung S bringbar. In der Bewegungsstellung S ist das zweite Seitenteil 10 von dem ersten Seitenteil 8 abgespreizt. Die Ferkelschutzeinrichtung 4 ist darüber hinaus in eine in Figur 2 gezeigte Ferkelschutzstellung F durch Verschwenken des zweiten Seitenteils 10 bringbar. In der Ferkelschutzstellung F ist das zweite Seitenteil 10 im Wesentlichen parallel zu dem ersten Seitenteil 8 angeordnet und ausgerichtet.

An dem ersten Seitenteil 8 ist ein erstes Türelement 16 angeordnet. An dem zweiten Seitenteil 10 ist ein zweites Türelement 18 angeordnet. Die Türelement 16, 18 begrenzen die Ferkelschutzeinrichtung 4 in der Ferkelschutzstellung F rückseitig. Das erste Türelement 16 ist an dem ersten Seitenteil 8 längenverstellbar angeordnet. Das zweite Türelement 18 ist an dem zweiten Seitenteil 10 längenverstellbar angeordnet. Die jeweiligen Türelemente 16, 18 sind jeweils mittels einer Gleitschienenanordnung 22 an dem jeweiligen ersten Seitenteil 8 und zweiten Seitenteil 10 längenverstellbar angeordnet. Jede der Gleitschienenanordnungen 22 weist eine an dem Seitenteil 8, 10 angeordnete Kulissenführung 24 auf. Die Türelemente 10, 18 weisen einen Führungsabschnitt 26 auf, der in der Kulissenführung 24 verschiebbar aufgenommen ist. Der Führungsabschnitt 26 ist in der Kulissenführung 24 schwenkbeweglich um eine Schwenkachse 28 aufgenommen. Die Schwenkachse 28 ist im Wesentlichen vertikal angeordnet.

Das erste Seitenteil 8 und das zweite Seitenteil 10 sind als gitterförmiges Seitenteil 8, 10 ausgebildet. Das zweite Seitenteil 10 weist einen Ferkelabweiser 30 auf. Der Ferkelabweiser 30 weist eine Ablegehilfe 32 für ein Muttertier 6, insbesondere für eine Sau 6, auf. Der Ferkelabweiser 30 ist beabstandet zu einer unteren Kante 34 des Seitenteils 10 angeordnet. Das Seitenteil 10 weist mehrere im Wesentlichen horizontal verlaufende und übereinander angeordnete Rohrelemente 36 auf. Der Ferkelabweiser 30 ist an einem von der unteren Kante 34 des Seitenteils 10 betrachtet zweiten Rohrelement 36 angeordnet und mit diesem verschweißt.

Das erste Türelement 16 und das zweite Türelement 18 weisen jeweils einen ersten Abschnitt 38 auf, der sich ausgehend von dem Führungsabschnitt 26 erstreckt und in der Ferkelschutzstellung F im Wesentlichen parallel zu den Seitenteilen 8, 10 verläuft. Das erste Türelement 16 und das zweite Türelement 18 weisen darüber hinaus einen zweiten Abschnitt 40 auf, der an den ersten Abschnitt 38 angrenzt und sich in der Ferkelschutzstellung in Richtung einer Rückseite 56 der Ferkelschutzeinrichtung 4 und nach innen erstreckt. Das erste Türelement 16 und das zweite Türelement 18 weisen darüber hinaus einen dritten Abschnitt 42 auf, der sich ausgehend von dem zweiten Abschnitt 40 erstreckt und in der Ferkelschutzstellung F im Wesentlichen rechtwinklig zu den Seitenteilen 8, 10 nach innen gerichtet ist.

An einem oder beiden Türelementen 16, 18 ist ein Verriegelungsmittel 44 angeordnet. Das Verriegelungsmittel 44 ist dazu eingerichtet, die Türelemente 16, 18 in der Ferkelschutzstellung F miteinander zu verriegeln. Die Trogkonsole 12 weist einen Aufstiegschutz 46 auf. Der Aufstiegschutz 46 weist mehrere, insbesondere zwei Rohrelemente 48 auf. Die Rohrelemente 48 sind im Wesentlichen rechtwinklig zu dem ersten Seitenteil 8 oberseitig an der Trogkonsole 12 angeordnet.

Das erste Seitenteil 8 ist beabstandet und insbesondere parallel zu der äußeren Umfassung 50 der Abferkelbucht angeordnet, sodass sich zwischen der äußeren Umfassung 50 der Abferkelbucht 2 und dem ersten Seitenteil 8 ein Ferkel-Rückzugsraum 58 ausbildet. Wie in Fig. 1 gezeigt ist, sind die Türelemente 16, 18 der Ferkelschutzeinrichtung 4 dazu eingerichtet, in der Bewegungsstellung S benachbart zu dem Kontaktgitter 52 der Abferkelbucht 2 angeordnet, insbesondere arretiert, zu werden. Mit anderen Worten wird damit in der in Fig. 1 gezeigten Bewegungsstellung S der Bewegungsbereich der Sau 6 ausschließlich durch die Ferkelschutzeinrichtung 4 in Zusammenschau mit dem Kontaktgitter 52 begrenzt. Weiterer Stalleinrichtungsbauteile bedarf es hierzu nicht.

Fig. 2 zeigt die erfindungsgemäße Abferkelbucht 2 mit der Ferkelschutzeinrichtung 4, wobei sich die Ferkelschutzeinrichtung 4 in der Ferkelschutzstellung F befindet. Hierbei wurde im Vergleich zu Fig. 1 das zweite Seitenteil 10 derart verschwenkt, dass es nunmehr im Wesentlichen parallel zu dem ersten Seitenteil 8 angeordnet ist. Mittels der Gleitschienenanordnung 22 lässt sich die Länge der Ferkelschutzeinrichtung 4 in der Ferkelschutzstellung F an die Anatomie der Sau 6 anpassen, insbesondere an deren Körperlänge. Das erste Türelement 16 und das zweite Türelement 18 wurden derart verschwenkt, dass diese nunmehr eine rückseitige Begrenzung 20 ausbilden. Mittels der Verriegelungsmittel 44 lassen sich die Türelemente 16, 18 miteinander verriegeln. Wie aus Fig. 2 zu entnehmen ist, verbleibt benachbart und hinter der Sau 6 ein ausreichend großes Volumen, um selbige etwa veterinärmedizinisch zu behandeln oder beim Abferkeln zu unterstützen.

### Bezugszeichenliste

- 2: Abferkelbucht
- 4: Ferkelschutzeinrichtung
- 6: Muttertier, insbesondere Sau
- 8: erstes Seitenteil
- 10: zweites Seitenteil
- 12: Trogkonsole
- 14: Schwenkachse des zweiten Seitenteils
- 16: erstes Türelement
- 18: zweites Türelement
- 20: Rückseitige Begrenzung der Ferkelschutzeinrichtung
- 22: Gleitschienenanordnung
- 24: Kulissenführung
- 26: Führungsabschnitt
- 28: Schwenkachse der Kulissenführung
- 30: Ferkelabweiser
- 32: Ablegehilfe
- 34: untere Kante des Seitenteils
- 36: Rohrelement
- 38: erster Abschnitt des Türelements
- 40: zweiter Abschnitt des Türelements
- 42: dritter Abschnitt des Türelements
- 44: Verriegelungsmittel
- 46: Aufstiegschutz
- 48: Rohrelemente des Aufstiegsschutzes
- 50: äußere Umfassung der Abferkelbucht
- 52: Kontaktgitter
- 54: Arretierung
- 56: Rückseite der Ferkelschutzeinrichtung
- 58: Ferkel-Rückzugsraum
- F: Ferkelschutzstellung
- S: Bewegungsstellung

## Patentansprüche

1. Ferkelschutzeinrichtung (4) für eine Abferkelbucht (2), mit
- einem ersten Seitenteil (8),
- einer mit dem ersten Seitenteil (8) verbundenen Trogkonsole (12), und
- einem schwenkbar um eine Schwenkachse (14) mit der Trogkonsole (12) verbundenen zweiten Seitenteil (10),
wobei die Ferkelschutzeinrichtung (4) durch Verschwenken des zweiten Seitenteils (10) in eine Ferkelschutzstellung (F) bringbar ist, bei der das zweite Seitenteil (10) im Wesentlichen parallel zu dem ersten Seitenteil (8) angeordnet ist,
und in eine Bewegungsstellung (S), bei der das zweite Seitenteil (10) von dem ersten Seitenteil (8) abgespreizt ist,
wobei an dem ersten Seitenteil (8) ein erstes Türelement (16) angeordnet ist und an dem zweiten Seitenteil (10) ein zweites Türelement (18) angeordnet ist, und wobei die Türelemente (16, 18) die Ferkelschutzeinrichtung (4) in der Ferkelschutzstellung (F) rückseitig begrenzen,
wobei
das erste Türelement (16) an dem ersten Seitenteil (8) und/oder das zweite Türelement (18) an dem zweiten Seitenteil (10) längenverstellbar angeordnet sind,
wobei das Türelement (16, 18) mittels einer Gleitschienenanordnung (22) an dem Seitenteil (8, 10) längenverstellbar angeordnet ist,
**dadurch gekennzeichnet, dass**
die Gleitschienenanordnung (22) eine an dem Seitenteil (8, 10) angeordnete Kulissenführung (24) aufweist, und wobei das Türelement (16, 18) einen Führungsabschnitt (26) aufweist, der in der Kulissenführung (24) verschiebbar aufgenommen ist.

2. Ferkelschutzeinrichtung (4) nach Anspruch 1,
wobei der Führungsabschnitt (26) in der Kulissenführung (24) schwenkbeweglich um eine Schwenkachse (28) aufgenommen ist.

3. Ferkelschutzeinrichtung (4) nach Anspruch 2,
wobei die Schwenkachse (28) im Wesentlichen vertikal angeordnet ist.

4. Ferkelschutzeinrichtung (4) nach einem der vorstehenden Ansprüche,
wobei das erste Seitenteil (8) und/oder das zweite Seitenteil (10) als gitterförmiges Seitenteil (8, 10) ausgebildet ist.

5. Ferkelschutzeinrichtung (4) nach einem der vorstehenden Ansprüche,
wobei das erste und/oder das zweite Seitenteil (8,10) einen Ferkelabweiser (30) aufweist.

6. Ferkelschutzeinrichtung (4) nach Anspruch 5,
wobei der der Ferkelabweiser (30) eine Ablegehilfe (32) für ein Muttertier (6), insbesondere für eine Sau (6), aufweist.

7. Ferkelschutzeinrichtung (4) nach Anspruch 5 oder 6,
wobei der Ferkelabweiser (30) beabstandet zu einer unteren Kante (34) des Seitenteils (8, 10) angeordnet ist, insbesondere wobei das Seitenteil (8, 10) mehrere im Wesentlichen horizontal verlaufende und übereinander angeordnete Rohrelementen (36) aufweist, und wobei der Ferkelabweiser (30) an einem von der unteren Kante (34) des Seitenteils (8,10) betrachtet zweiten Rohrelement (36) angeordnet ist, insbesondere mit diesem verschweißt ist.

8. Ferkelschutzeinrichtung (4) nach einem der vorstehenden Ansprüche,
wobei das Türelement (16, 18) einen ersten Abschnitt (38) aufweist, der sich ausgehend von dem Führungsabschnitt (26) erstreckt und in der Ferkelschutzstellung (F) im Wesentlichen parallel zu den Seitenteilen (8, 10) verläuft, und wenigstens einen zweiten Abschnitt (40), der an den ersten Abschnitt (38) angrenzt und sich in der Ferkelschutzstellung (F) in Richtung einer Rückseite (56) der Ferkelschutzeinrichtung (4) und nach innen erstreckt.

9. Ferkelschutzeinrichtung (4) nach Anspruch 8,
wobei das Türelement (16, 18) einen dritten Abschnitt (42) aufweist, der sich ausgehend von dem zweiten Abschnitt (40) erstreckt und in der Ferkelschutzstellung (F) im Wesentlichen rechtwinklig zu den Seitenteilen (8, 10) nach innen gerichtet ist.

10. Ferkelschutzeinrichtung (4) nach einem der vorstehenden Ansprüche,
wobei an wenigstens einem der Türelemente (16, 18) ein Verriegelungsmittel (44) angeordnet ist, welches dazu eingerichtet ist, die Türelemente (16, 18) in der Ferkelschutzstellung (F), insbesondere miteinander, zu verriegeln.

11. Ferkelschutzeinrichtung (4) nach einem der vorstehenden Ansprüche,
wobei die Trogkonsole (12) einen Aufstiegschutz (46) aufweist, welcher insbesondere ein oder mehrere Rohrelemente (48) aufweist, wobei die Rohrelemente (48) im Wesentlichen rechtwinklig zu dem ersten Seitenteil (8) oberseitig an der Trogkonsole (12) angeordnet sind.

12. Abferkelbucht (2) mit einer Ferkelschutzeinrichtung (4), wobei die Ferkelschutzeinrichtung (4) nach einem der vorstehenden Ansprüche ausgebildet ist.

13. Abferkelbucht (2) nach Anspruch 12,
wobei das erste Seitenteil (8) beabstandet und insbesondere parallel zu einer äußeren Umfassung (50) der Abferkelbucht (2) angeordnet ist, und/oder wobei die Abferkelbucht (2) ein Kontaktgitter (52) aufweist und wobei die Türelemente (16, 18) dazu eingerichtet sind, in der Bewegungsstellung (S) benachbart zu dem Kontaktgitter (52) arretiert zu werden.

## Claims

1. Piglet-protection device (4) for a farrowing pen (2), having
- a first side part (8),
- a trough console (12), which is connected to the first side part (8), and
- a second side part (10), which is connected to the trough console (12) so as to be pivotable about a pivot axis (14),
wherein, by way of pivoting of the second side part (10), the piglet-protection device (4) can be brought into a piglet-protection position (F), in which the second side part (10) is arranged substantially parallel to the first side part (8), and into a movement position (S), in which the second side part (10) is spread away from the first side part (8),
wherein a first door element (16) is arranged on the first side part (8) and a second door element (18) is arranged on the second side part (10), and wherein the door elements (16, 18) delimit the piglet-protection device (4) at the rear in the piglet-protection position (F), wherein the first door element (16) is arranged in a length-adjustable manner on the first side part (8) and/or the second door element (18) is arranged in a length-adjustable manner on the second side part (10),
wherein the door element (16, 18) is arranged in a length-adjustable manner on the side part (8, 10) by means of a sliding-rail arrangement (22),
**characterized in that** the sliding-rail arrangement (22) has a slotted guide (24) which is arranged on the side part (8, 10), and wherein the door element (16, 18) has a guide section (26) which is displaceably received in the slotted guide (24).

2. Piglet-protection device (4) according to claim 1,
wherein the guide section (26) is received in the slotted guide (24) so as to be pivotable about a pivot axis (28).

3. Piglet-protection device (4) according to claim 2,
wherein the pivot axis (28) is arranged substantially vertically.

4. Piglet-protection device (4) according to one of the preceding claims, wherein the first side part (8) and/or the second side part (10) are/is in the form of a grid-like side part (8, 10).

5. Piglet-protection device (4) according to one of the preceding claims, wherein the first and/or the second side part (8, 10) have/has a piglet deflector (30).

6. Piglet-protection device (4) according to claim 5,
wherein the piglet deflector (30) has a lying-down aid (32) for a mother animal (6), in particular for a sow (6).

7. Piglet-protection device (4) according to claim 5 or 6,
wherein the piglet deflector (30) is arranged spaced apart from a lower edge (34) of the side part (8, 10), in particular wherein the side part (8, 10) has multiple substantially horizontally extending tubular elements (36) which are arranged one above the other, and wherein the piglet deflector (30) is arranged on a tubular element (36) which, as viewed from the lower edge (34) of the side part (8, 10), is the second tubular element, in particular is welded thereto.

8. Piglet-protection device (4) according to one of the preceding claims,
wherein the door element (16, 18) has a first section (38), which extends from the guide section (26) and, in the piglet-protection position (F), extends substantially parallel to the side parts (8, 10), and has at least one second section (40), which adjoins the first section (38) and, in the piglet-protection position (F), extends in the direction of a rear side (56) of the piglet-protection device (4) and inwards.

9. Piglet-protection device (4) according to claim 8,
wherein the door element (16, 18) has a third section (42), which extends from the second section (40) and, in the piglet-protection position (F), is directed inwards substantially at a right angle to the side parts (8, 10).

10. Piglet-protection device (4) according to one of the preceding claims,
wherein a locking means (44) is arranged on at least one of the door elements (16, 18), and is configured to lock the door elements (16, 18), in particular to one another, in the piglet-protection position (F).

11. Piglet-protection device (4) according to one of the preceding claims, wherein the trough console (12) has a climbing prevention means (46), which has in particular one or more tubular elements (48), wherein the tubular elements (48) are arranged on the trough console (12) at the upper side substantially at a right angle to the first side part (8).

12. Farrowing pen (2) having a piglet-protection device (4), wherein the piglet-protection device (4) is designed according to one of the preceding claims.

13. Farrowing pen (2) according to claim 12,
wherein the first side part (8) is arranged spaced apart from and in particular parallel to an outer enclosure (50) of the farrowing pen (2), and/or
wherein the farrowing pen (2) has a contact grid (52), and wherein the door elements (16, 18) are configured to be arrested adjacent to the contact grid (52) in the movement position (S).

## Revendications

1. Dispositif de protection de porcelet (4) pour une loge de mise bas de porcelet (2), avec
- une première partie latérale (8),
- une console d'auge (12) reliée à la première partie latérale (8), et
- une deuxième partie latérale (10) reliée à la console d'auge (12) de manière à pouvoir pivoter autour d'un axe de pivotement (14),
dans lequel le dispositif de protection de porcelet (4) peut être amené, par pivotement de la deuxième partie latérale (10), dans une position de protection de porcelet (F), dans laquelle la deuxième partie latérale (10) est disposée sensiblement parallèlement à la première partie latérale (8),
et dans une position de déplacement (S), dans laquelle la deuxième partie latérale (10) est écartée de la première partie latérale (8),
dans lequel un premier élément formant porte (16) est disposé sur la première partie latérale (8) et un deuxième élément formant porte (18) est disposé sur la deuxième partie latérale (10), et dans lequel les éléments formant porte (16, 18) délimitent, côté arrière, le dispositif de protection de porcelet (4) dans la position de protection de porcelet (F),
dans lequel
le premier élément formant porte (16) sur la première partie latérale (8) et/ou le deuxième élément formant porte (18) sur la deuxième partie latérale (10) sont disposés de manière réglable en longueur,
dans lequel l'élément formant porte (16, 18) est disposé de manière réglable en longueur sur la partie latérale (8, 10) au moyen d'un ensemble de glissière (22),
**caractérisé en ce que**
l'ensemble de glissière (22) présente un guide à coulisse (24) disposé sur la partie latérale (8, 10), et dans lequel l'élément formant porte (16, 18) présente une partie de guidage (26), qui est reçue de manière coulissante dans le guide à coulisse (24).

2. Dispositif de protection de porcelet (4) selon la revendication 1,
dans lequel la partie de guidage (26) est reçue dans le guide à coulisse (24) de manière à être mobile en pivotement autour d'un axe de pivotement (28).

3. Dispositif de protection de porcelet (4) selon la revendication 2,
dans lequel l'axe de pivotement (28) est disposé sensiblement verticalement.

4. Dispositif de protection de porcelet (4) selon l'une quelconque des revendications précédentes,
dans lequel la première partie latérale (8) et/ou la deuxième partie latérale (10) est réalisée en tant que partie latérale (8, 10) en forme de grille.

5. Dispositif de protection de porcelet (4) selon l'une quelconque des revendications précédentes,
dans lequel la première et/ou la deuxième partie latérale (8, 10) présente un chasse-porcelet (30).

6. Dispositif de protection de porcelet (4) selon la revendication 5,
dans lequel le chasse-porcelet (30) présente un système d'aide à la mise bas (32) pour une mère (6), en particulier pour une truie (6).

7. Dispositif de protection de porcelet (4) selon la revendication 5 ou 6,
dans lequel le chasse-porcelet (30) est disposé de manière espacée d'un bord inférieur (34) de la partie latérale (8, 10), en particulier dans lequel la partie latérale (8, 10) présente plusieurs éléments tubulaires (36) s'étendant sensiblement horizontalement et superposés, et
dans lequel le chasse-porcelet (30) est disposé sur un deuxième élément tubulaire (36) considéré à partir du bord inférieur (34) de la partie latérale (8, 10), en particulier soudé à celui-ci.

8. Dispositif de protection de porcelet (4) selon l'une quelconque des revendications précédentes,
dans lequel l'élément formant porte (16, 18) présente une première partie (38), qui s'étend à partir de la partie de guidage (26) et dans la position de protection de porcelet (F) passe sensiblement parallèlement aux parties latérales (8, 10), et au moins une deuxième partie (40), qui est adjacente à la première partie (38) et, dans la position de protection de porcelet (F), s'étend en direction d'un côté arrière (56) du dispositif de protection de porcelet (4) et vers l'intérieur.

9. Dispositif de protection de porcelet (4) selon la revendication 8,
dans lequel l'élément formant porte (16, 18) présente une troisième partie (42), qui s'étend à partir de la deuxième partie (40) et, dans la position de protection de porcelet (F), est dirigée vers l'intérieur sensiblement perpendiculairement aux parties latérales (8, 10).

10. Dispositif de protection de porcelet (4) selon l'une quelconque des revendications précédentes,
dans lequel un moyen de verrouillage (44), lequel est conçu pour verrouiller les éléments formant porte (16, 18) dans la position de protection de porcelet (F), en particulier l'un avec l'autre, est disposé sur au moins un des éléments formant porte (16, 18).

11. Dispositif de protection de porcelet (4) selon l'une quelconque des revendications précédentes,
dans lequel la console d'auge (12) présente une protection anti-montée (46), laquelle présente en particulier un ou plusieurs éléments tubulaires (48), dans lequel les éléments tubulaires (48) sont disposés côté supérieur sur la console d'auge (12) sensiblement perpendiculairement à la première partie latérale (8).

12. Loge de mise bas (2) avec un dispositif de protection de porcelet (4), dans laquelle le dispositif de protection de porcelet (4) est réalisé selon l'une quelconque des revendications précédentes.

13. Loge de mise bas (2) selon la revendication 12,
dans laquelle la première partie latérale (8) est disposée de manière espacée et en particulier parallèlement à une enceinte extérieure (50) de la loge de mise bas (2), et/ou
dans laquelle la loge de mise bas (2) présente une grille de contact (52) et dans laquelle les éléments formant porte (16, 18) sont conçus pour être bloqués au voisinage de la grille de contact (52) dans la position de déplacement (S).
